# EUROPÄISCHE PATENTSCHRIFT

(11) **EP 0 666 062 B1**
(45) Veröffentlichungstag und Bekanntmachung des Hinweises auf die Patenterteilung: **11.09.1996**
(21) Anmeldenummer: 95100099.1
(22) Anmeldetag: 05.01.1995
(51) Int. Cl.: A61C 13/00

(54) **Verfahren und Vorrichtung zur Herstellung von an Implantaten zu befestigenden zahnprothetischen Gerüsten**
Method and device for making dental frames which have to be connected to dental implants
Méthode et dispositif de fabrication de prothèses dentaires destinées à être fixées aux implants

(30) Priorität: 28.01.1994 DE 4402511
(43) Veröffentlichungstag der Anmeldung: 09.08.1995
(73) Patentinhaber: Rübeling, Günter, D-27507 Bremerhaven (DE)
(72) Erfinder: Rübeling, Günter, D-27507 Bremerhaven (DE); Otten, Burghard, D-27652 Misselwarden (DE)
(74) Vertreter: Eisenführ, Speiser & Partner

(56) Entgegenhaltungen:
- EP-A- 0 225 513
- EP-A- 0 306 864
- WO-A-93/20774
- DE-A- 3 110 694
- DE-A- 4 138 803

## Beschreibung

Die Erfindung betrifft ein Verfahren zur Ausbildung von an Implantaten zu befestigenden zahnprothetischen Gerüsten, mit den Schritten,
- mindestens vom das Implantat enthaltenden Abschnitt eines Kiefers eines Patienten ein Modell herzustellen und darin eine Modellhülse aus Metall an einer Stelle anzuordnen, die der Position des Implantates im Kiefer des Patienten entspricht, und
- ein zahnprothetisches Gerüst aus Metall anhand des Modelles herzustellen.

Die Erfindung betrifft ferner eine Vorrichtung zur Ausbildung von an Implantaten zu befestigenden zahnprothetischen Gerüsten, mit einer an einer der Position des Implantates im Kiefer eines Patienten entsprechenden Stelle in einem mindestens vom das Implantat enthaltenden Abschnitt des Kiefers hergestellten Modell positionierbaren Modellhülse aus Metall.

Ein derartiges Verfahren und eine derartige Vorrichtung sind allgemein im Stand der Technik bekannt.

Ein Problem bei Verfahren und Vorrichtungen der eingangs genannten Art bestand bisher darin, daß es bei Befestigung eines zahnprothetischen Gerüstes an zwei oder mehr Implantaten durch die bisher verwendeten guß- und löttechnischen Arbeitsabläufe zu unumgänglichen Spannungen im Gerüst und in der darauf sitzenden Suprastruktur kam. Dadurch traten Druck- und Zugbelastungen auf, die sich wiederum auf die osseointegrierten Implantate auswirkten und zwangsläufig zum Abbau von wichtiger Knochensubstanz führten. Langfristig war in solchen Fällen immer mit dem Verlust eines oder mehrerer Implantate zu rechnen.

Es ist daher Aufgabe der vorliegenden Erfindung, das eingangs genannte Verfahren und die eingangs genannte Vorrichtung derart zu verbessern, daß ein im wesentlichen spannungsfreier Sitz zwischen den Implantaten und des darauf zu befestigenden zahnprothetischen Gerüstes erzielbar ist.

Zur Lösung dieser Aufgabe sind bei dem Verfahren der eingangs genannten Art erfindungsgemäß die folgenden Schritte vorgesehen, nämlich
- eine Implantatelektrode aus Metall, dessen Kopf dem Kopf des Implantates im wesentlichen entspricht, in der Modellhülse lösbar zu befestigen,
- an eine Funkenerosionseinrichtung die Modellhülse und/oder die Implantatelektrode einerseits und das zahnprothetische Gerüst andererseits derart anzuschließen, daß die Modellhülse und/oder die Implantatelektrode die eine Elektrode und das zahnprothetische Gerüst die andere Elektrode bildet, und

- das Modell mit der Implantatelektrode und das zahnprothetische Gerüst aufeinanderzu zu bewegen und dabei das zahnprothetische Gerüst so zu erodieren, daß es an den Kopf des Implantates angepaßt wird.

Außerdem wird die zuvor genannte Aufgabe dadurch gelöst, daß die Vorrichtung der eingangs genannten Art erfindungsgemäß zusätzlich versehen ist mit
- einer aus Metall gefertigten und in der Modellhülse befestigbaren Implantatelektrode, deren Kopf dem Kopf des Implantates im wesentlichen entspricht, und
- einer Funkenerosionseinrichtung, die derart ausgebildet ist, daß
   - an diese die Modellhülse und/oder die Implantatelektrode einerseits und ein zuvor hergestelltes zahnprothetisches Gerüst andererseits derart anschließbar sind, daß die Modellhülse und/oder die Implantatelektrode die eine Elektrode und das zahnprothetische Gerüst die andere Elektrode bildet, und
   - das Modell mit der Implantatelektrode und das zahnprothetische Gerüst aufeinanderzu bewegbar sind und dabei das zahnprothetische Gerüst so erodierbar ist, daß es an den Kopf des Implantates anpaßbar ist.

Mit Hilfe der Erfindung ist es nun erstmals möglich, einen spannungsfreien Sitz zwischen Implantaten und dem daran zu befestigenden zahnprothetischen Gerüst herzustellen. Um eine solche spalt- und spannungsfreie Passung des zahnprothetischen Gerüstes auf den Implantaten zu erzielen, wird erfindungsgemäß das zahnprothetische Gerüst auf Implantatelektroden auferodiert, die zuvor in der Modellhülse befestigt worden sind. Üblicherweise sollten gesonderte Implantatelektroden verwendet werden, durch die die zuvor in die Modellhülsen eingesetzten Modellimplantate ausgetauscht werden, um eine Beschädigung der Modellimplantate durch den Erodiervorgang zu vermeiden.

Durch die Möglichkeit, die Implantatelektroden während Unterbrechungen des Erodiervorganges in der Modellhülse auszutauschen, können diese nach Bedarf so lange gewechselt werden, bis eine absolut spannungsfreie Passung zwischen den Implantaten und den zahnprothetischen Gerüsten entsteht und die Implantatelektroden keinen Abrand mehr aufweisen. Nach dem Erodiervorgang kann die Überprüfung auf in die Modellhülse eingeschraubten Modellimplantaten vorgenommen werden.

Zweckmäßigerweise sollte der Kopf der Implantatelektrode dem Kopf des Implantates unter Berücksichtigung des Funkenspaltes entsprechen, d.h. bei der Dimensionierung des Kopfes der Implantatelektrode ist der Elektrodenabbrand zu berücksichtigen, um gleiche Abmessungen zu erhalten.

Vorzugsweise ist die Modellhülse mit einem Schlitz oder Spalt zur Aufnahme von leitfähigem Material, wie z.B. Draht, Litze oder Band, für den Anschluß an die Funkenerosionseinrichtung versehen. Das leitfähige Material wird bei Herstellung des Modells in diesem so plaziert, daß mittels Eingriff durch den Schlitz oder Spalt der im Modell anzuordnenden Modellhülse auf einfache Weise ein elektrischer Kontakt zwischen dem leitfähigen Material und der Modellhülse hergestellt wird und somit bei der später erfolgenden Erodierung der erforderliche Stromfluß gesichert wird. Gemäß einer vorteilhaften Weiterbildung dieser Ausführung befindet sich der Schlitz oder Spalt im Fuß der Modellhülse.

Gemäß einer gegenwärtig besonders bevorzugten Ausführung der Erfindung sind entsprechend den unterschiedlichen Kopfformen von erhältlichen Implantatfabrikaten verschiedene Implantatelektroden vorgesehen, deren Profil außerhalb des Kopfes im wesentlichen gleich und auf die Modellhülse abgestimmt ist. Dementsprechend weist die Modellhülse einen genormten Innenschaft auf, welcher in der Lage ist, auf unterschiedliche Implantatfabrikate adaptierte Implantatelektroden aufzunehmen. Der Kopf der Implantatelektrode ist immer entsprechend dem jeweilig verarbeiteten Implantatfabrikat ausgebildet. Das unter dem Implantatelektrodenkopf befindliche Profil ist dagegen auf die Modellhülse abgestimmt. Demnach wird zur Herstellung des Modelles immer nur ein Modellhülsentyp verwendet, was sich vorteilhaft auf die Kosten und die Handhabung der Erfindung auswirkt. Das gleiche gilt im übrigen auch für Modellimplantate.

Vorzugsweise wird vor Herstellung des Modells ein Abdruck im Kiefer des Patienten über das Implantat mit einem Abdruckpfosten genommen und die Modellhülse am Abdruckpfosten lösbar befestigt. Auf diese Weise ist es in besonders einfacher und somit vorteilhafter Weise möglich, die Originalposition der Implantate auch im Modell zu erhalten und zu gewährleisten.

Zweckmäßigerweise wird nach der Herstellung des Modells und vor Herstellung des zahnprothetischen Gerüstes ein Modellimplantat, dessen Kopf dem Kopf des Implantates gleicht, in der Modellhülse befestigt und ein Aufbauelement, insbesondere aus Kunststoff, am Modellimplantat lösbar befestigt. An derartigen Aufbauelementen, die gewöhnlich auf das Modellimplantat aufgeschraubt werden, kann dann das zahnprothetische Gerüst beispielsweise aus Wachs oder Silikon modelliert werden. Von dem so hergestellten Modell des zahnprothetischen Gerüstes wird eine Form genommen, in der dann das zahnprothetische Gerüst aus Metall gegossen wird.

Eine bevorzugte Ausführung der Erfindung wird anhand der beiliegenden Zeichnungen nachfolgend näher beschrieben. Es zeigen:
- Figur 1: einen Querschnitt durch ein Modell mit darin eingesetzten Modellhülsen;
- Figur 2: einen Querschnitt durch ein Modell mit darin eingesetzter Modellhülse, in der ein Modell implantat befestigt ist;
- Figur 3: die gleiche Anordnung wie Figur 2, wobei auf dem Modellimplantat ein Kunststoffaufbau angeordnet ist;
- Figur 4: einen Querschnitt durch ein Modell mit darin eingesetzter Modellhülse, in der anstelle der Modellhülse eine Implantatelektrode befestigt ist; und
- Figur 5: schematisch die Gesamtanordnung von Funkenerosionseinrichtung, Modellhülse, Implantatelektrode und zahnprothetischem Gerüst während des Erodiervorganges.

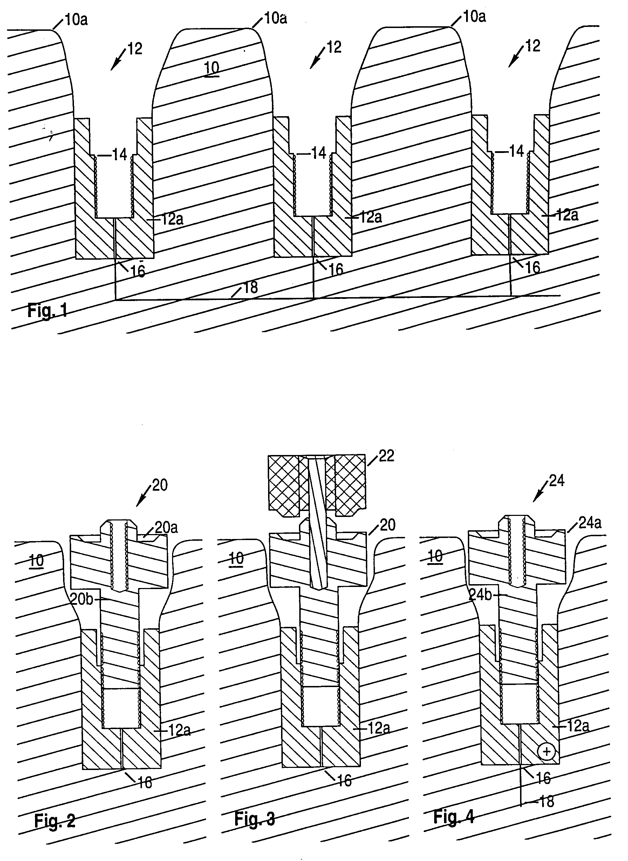

In Figur 1 ist im Querschnitt ein Modell 10 mit darin eingelassenen Modellhülsen 12 dargestellt.

Das Modell wird in üblicher Weise hergestellt, was nachfolgend aus Gründen der Vollständigkeit kurz beschrieben wird, obwohl die Herstellung des Modells in den Zeichnungen nicht dargestellt ist.

Da es das Ziel ist, ein zahnprothetisches Gerüst, bei dem es sich beispielsweise um Kronen, Brücken, Stegkonstruktionen, Prothesen o.dgl. handeln kann, an bereits im Kiefer vorhandenen Implantaten zu befestigen, wird zumindest im Bereich der Implantate vom Kiefer des Patienten ein Abdruck mit vom Hersteller der Implantate vorgeschriebenen Abdruckpfosten genommen. Nach Herstellung des Abdruckes werden auf die darin steckenden Abdruckpfosten die Modellhülsen 12 gesteckt bzw. geschraubt, so daß beim Gießen des Modells 10 im Abdruck die Modellhülsen 12 in das Modell 10 eingegossen werden. Dadurch wird gewährleistet, daß die Modellhülsen 12 an denselben Stellen im Modell 10 angeordnet werden wie die Implantate im Kiefer. Hierbei ist es besonders vorteilhaft, zum Gießen des Modells niedrigschmelzendes Metall zu verwenden.

Die Modellhülsen 12 sind aus elektroleitfähigem Material hergestellt. Der zur Oberfläche 10a des Modells 10 offene Innenschaft 14 der Hülsen 12 ist so ausgebildet, daß nachfolgend noch näher zu beschreibende genormte Profilkörper aufgenommen werden können. Die Hülsen 12 weisen an ihrem Fuß 12a jeweils einen Schlitz oder Spalt 16 auf. In diesen Spalt oder Schlitz 16 wird bei der Herstellung des Modells 10 leitfähiges Material eingeführt, damit bei der noch näher zu beschreibenden Erodierung der erforderliche Stromfluß gewährleistet wird. Als leitfähige Materialien werden vorzugsweise Drähte, Litze oder Kupferbänder verwendet; in Figur 1 ist beispielhaft ein Draht 18 dargestellt. Wie in Figur 1 ebenfalls gezeigt ist, werden die einzelnen Hülsen 12 über das leitfähige Material (Draht 18) miteinander verbunden, um gemeinsam an einen Generator einer später noch näher zu beschreibenden Funkenerosionseinrichtung angeschlossen zu werden.

Auf die Modellhülsen 12 im fertiggestellten Modell 10 werden dann Modellimplantate 20 aufgesetzt bzw. in die Modellhülsen 12 eingeschraubt, wie in Figur 2 gezeigt ist. Durch den genormten Innenschaft 14 (vgl. Figur 1) sind die Modellhülsen 12 in der Lage, Modellimplantate 20 jeden Fabrikats aufzunehmen. Der Kopf 20a der verwendeten Modellimplantate 20 ist in seiner Form identisch mit dem Kopf des im Kiefer des Patienten entsprechenden Implantat-Fabrikates. Der unter dem Kopf 20a befindliche Abschnitt 20b ist bei allen hier verwendeten Modellimplantaten 20 genormt und auf das Profil des Innenschaftes 14 der Modellhülsen 12 abgestimmt. Wird das gewählte Modellimplantat 20 in die Modellhülse 12 gesetzt bzw. geschraubt, die ja die Verankerung des Implantates im Kiefer "simuliert", sind die Modellhülse 12 und das Modellimplantat 20 zu einer Einheit verbunden, wodurch ein positionsgeführter Sitz gewährleistet ist.

Auf die so im Modell 10 verankerten Modellimplantate 20 werden dann passende Kunststoffaufbauelemente gesetzt, die als Basis zur Modellierung des zahnprotetischen Gerüstes dienen. Für jedes Implantatfabrikat sind entsprechende Kunststoffaufbauelemente vorhanden. In Figur 3 ist beispielhaft die Anordnung eines derartigen Kunststoffaufbauelementes 22 auf dem Modellimplantat 20 dargestellt.

Nach Modellierung des zahnprothetischen Gerüstes wird das - in den Figuren nicht dargestellte - so hergestellte Ausgangsmodell zusammen mit den Kunststoffaufbauelementen 22 vom Modell 10 des Kiefers und somit von den Modellimplantaten 20 abgenommen. Anschließend wird von dem Ausgangsmodell ein Abdruck genommen, in dem dann das zahnprothetische Gerüst aus Metall gegossen wird. Dabei kommt es häufig zu leichten Veränderungen zwischen dem Ausgangsmodell und dem fertig gegossenen Gerüst.

Um eine spalt- und spannungsfreie Passung des zahnprothetischen Gerüstes auf den Modellimplantaten und somit auf den im Kiefer befindlichen Implantaten zu erzielen, muß das zahnprothetische Gerüst auf die Modellimplantate auferodiert werden. Dazu ist es notwendig, die Modellimplantate 20, wie sie in den Figuren 2 oder 3 gezeigt sind, durch eine Implantatelektrode 24 auszutauschen, die in Figur 4 dargestellt ist. Die Implantatelektrode 24 hat im wesentlichen die gleiche Form wie das entsprechende Modellimplantat 20. Allerdings sind die Abmessungen des Kopfes 24a der Implantatelektrode 24 unter Berücksichtigung des Funkenspaltes bzw. Elektrodenabbrandes dimensioniert, entsprechen jedoch im übrigen denen des Kopfes 20a des Modellimplantates 20. So wie es für die unterschiedlichen Implantatfabrikate unterschiedliche Modellimplantate gibt, kann auch zwischen entsprechenden Implantatelektroden ausgewählt werden. Wie bei den Modellimplantaten 20 ist auch der unterhalb des Kopfes 24a befindliche Abschnitt 24b bei allen zur Verfügung stehenden Implantatelektroden 24 genormt und auf die Abmessungen des Innenschaftes 14 der Modellhülse 12 abgestimmt. Somit kommt es nach Austausch des Modellimplantates 20 gegen die Implantatelektrode 24 zu keinerlei Änderungen innerhalb und oberhalb der Modellhülse 12. Der einzige Unterschied liegt - neben der bereits erwähnten leicht veränderten Form des Kopfes 24a wegen Berücksichtigung des Funkenspaltes - allein in der Beschaffenheit des Materials der Implantatelektrode 24, welches für den Erodiervorgang entsprechend geeignet sein muß.

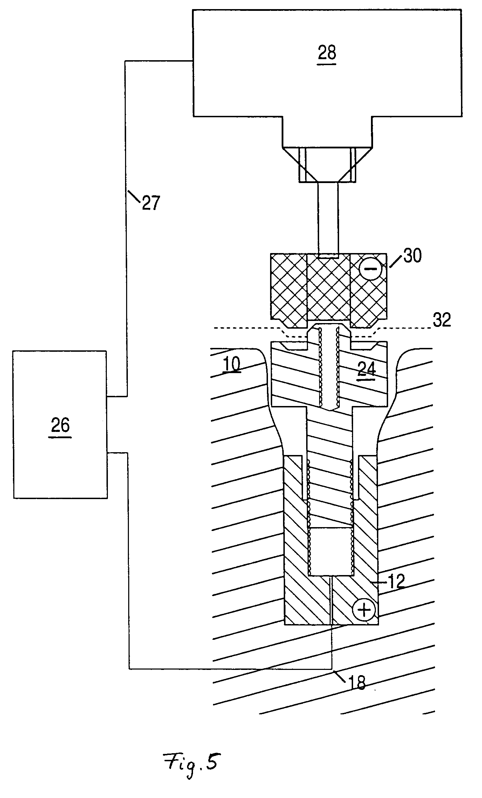

In Figur 5 ist nun der Erodiervorgang mittels einer geeigneten elektrischen Funkenerosionseinrichtung schematisch dargestellt. Hierzu werden die Modellhülsen 12 mit Hilfe des Drahtes 18 an den Plus-Pol eines Generators 26 der Funkenerosionseinrichtung angeschlossen. Da die Implantatelektrode 24 wie die Modellhülse 12 aus elektrisch leitendem Material besteht und in die Modellhülse 12 eingeschraubt ist, liegt somit die Spannung an der Implantatelektrode 24 an. Über eine weitere Anschlußleitung 27 ist eine Haltevorrichtung 28, die ebenfalls Teil der Funkenerosionseinrichtung ist, an den Minus-Pol des Generators 26 angeschlossen. In die Haltevorrichtung 28 ist das zahnprothetische Gerüst 30 eingespannt, und zwar so, daß es in Richtung auf das Modell 10 und mit den gewünschten Abschnitten auf die Implantatelektroden 24 ausgerichtet und auf diese zu bewegbar ist. Da das zahnprothetische Gerüst 30 mit der Halterungsvorrichtung 28 elektrisch leitend verbunden ist, liegt am zahnprothetischen Gerüst 30 das negative Potential an.

Demnach sind die Implantatelektroden 24 einerseits und das zahnprothetische Gerüst 30 andererseits an die Funkenerosionseinrichtung derart angeschlossen, daß die Implantatelektroden 24 die Plus-Elektroden der Funkenerosionseinrichtung und das zahnprothetische Gerüst 30 die Minus-Elektrode der Funkenerosionseinrichtung bilden Wird nun das zahnprothetische Gerüst 30 mit Hilfe der Haltevorrichtung 28 auf die Implantatelektroden 24 zu bewegt, so wird durch Berührung die Funkenerosion ausgelöst, und es entsteht ein Funkenspalt 32, wobei das zahnprothetische Gerüst 30 durch die Implantatelektroden 24 so lange erodiert wird, bis eine absolut spannungsfreie Passung zwischen den Implantatelektroden 24 und dem zahnprothetischen Gerüst 30 besteht und die Implantatelektroden 24 keinen Abrand mehr aufweisen. Durch die Möglichkeit, die Implantatelektroden 24 wahrend des Erodiervorganges in den Modellhülsen 12 auszutauschen, können diese während des Erodiervorganges ebenfalls nach Bedarf so lange gewechselt werden, bis die gewünschte spannungsfreie Passung erzielt ist. Nach dem Erodiervorgang kann dann beispielsweise die Überprüfung auf den in die Modellhülsen 12 wieder eingeschraubten Modellimplantaten 20 vorgenommen werden.

Um für diese Verfahrenstechnik die Erosionen vorzunehmen, mußten entsprechende Funkenerosionseinrichtungen entwickelt werden, die über eine besondere Regelung der Leistungsstufen verfügen. Diese Regelung sorgt dafür, daß eine Vielzahl von Leistungsstufen, vorzugsweise auf elektronische Weise, mit einer hohen Sensibilität gesteuert werden, um die erforderliche Präzision und hohe Oberflächengüte beim Erodieren zu erzielen. Hohe Leistungsstufen sind nötig, um die im Dental-Bereich hochfließenden Legierungen spaltfrei und paßgenau erodieren zu können, so daß insbesondere bei Gold, Paladium, Nichtedelmetallen und Titan problemlos erodiert werden kann.

## Patentansprüche

1. Verfahren zur Ausbildung von an Implantaten zu befestigenden zahnprothetischen Gerüsten (30), mit den Schritten,
- mindestens vom das Implantat enthaltenden Abschnitt eines Kiefers eines Patienten ein Modell (10) herzustellen und darin eine Modellhülse (12) aus Metall an einer Stelle anzuordnen, die der Position des Implantates im Kiefer des Patienten entspricht, und
- ein zahnprothetisches Gerüst (30) aus Metall anhand des Modelles (10) herzustellen,
gekennzeichnet durch die weiteren Schritte,
- eine Implantatelektrode (24) aus Metall, deren Kopf (24a) dem Kopf des Implantates im wesentlichen entspricht, in der Modellhülse (12) lösbar zu befestigen,
- an eine Funkenerosionseinrichtung (26, 28) die Modellhülse (12) und/oder die Implantatelektrode (24) einerseits und das zahnprothetische Gerüst (30) andererseits derart anzuschließen, daß die Modellhülse (12) und/oder die Implantatelektrode (24) die eine Elektrode und das zahnprothetische Gerüst (30) die andere Elektrode bildet, und
- das Modell (10) mit Implantatelektrode (24) und das zahnprothetische Gerüst (30) aufeinanderzu zu bewegen und dabei das zahnprothetische Gerüst (30) so zu erodieren, daß es an den Kopf des Implantates angepaßt wird.

2. Verfahren nach Anspruch 1,
dadurch gekennzeichnet, daß der Kopf (24a) der Implantatelektrode (24) dem Kopf des Implantates unter Berücksichtigung des Funkenspaltes (32) entspricht.

3. Verfahren nach Anspruch 1 oder 2,
dadurch gekennzeichnet, daß die Modellhülse (12) mit einem Schlitz oder Spalt (16) zur Aufnahme von leitfähigem Material (18), wie z.B. Draht, Litze oder Band, für den Anschluß an die Funkenerosionseinrichtung (26, 28) versehen wird.

4. Verfahren nach mindestens einem der Ansprüche 1 bis 3,
dadurch gekennzeichnet, daß vor Herstellung des Modells (10)
- ein Abdruck im Kiefer des Patienten über das Implantat mit einem Abdruckpfosten genommen wird und
- die Modellhülse (12) am Abdruckpfosten lösbar befestigt wird.

5. Verfahren nach mindestens einem der Ansprüche 1 bis 4,
dadurch gekennzeichnet, daß nach der Herstellung des Modells (10) und vor Herstellung des zahnprothetischen Gerüstes (30)
- ein Modellimplantat (20), dessen Kopf (24a) dem Kopf des Implantates gleicht, in der Modellhülse (12) lösbar befestigt wird und
- ein Aufbauelement (22), insbesondere aus Kunststoff, am Modellimplantat (20) lösbar befestigt wird.

6. Vorrichtung zur Ausbildung von an Implantaten zu befestigenden zahnprothetischen Gerüsten (30), insbesondere unter Ausführung eines Verfahrens nach mindestens einem der Ansprüche 1 bis 5, mit
- einer an einer der Position des Implantates im Kiefer eines Patienten entsprechenden Stelle in einem mindestens vom das Implantat enthaltenden Abschnitt des Kiefers hergestellten Modell (10) positionierbaren Modellhülse (12) aus Metall,
gekennzeichnet durch
- eine aus Metall gefertigte und in der Modellhülse (12) befestigbare Implantatelektrode (24), deren Kopf (24a) dem Kopf des Implantates im wesentlichen entspricht, und
- eine Funkenerosionseinrichtung (26, 28), die derart ausgebildet ist, daß
- an diese die Modellhülse (12) und/oder die Implantatelektrode (24) einerseits und ein zuvor hergestelltes zahnprothetisches Gerüst (30) andererseits derart anschließbar sind, daß die Modellhülse (12) und/oder die Implantatelektrode (24) die eine Elektrode und das zahnprothetische Gerüst (30) die andere Elektrode bildet, und
- das Modell (10) mit Implantatelektrode (24) und das zahnprothetische Gerüst (30) aufeinanderzu bewegbar sind und dabei das zahnprothetische Gerüst (30) so erodierbar ist, daß es an den Kopf des Implantates anpaßbar ist.

7. Vorrichtung nach Anspruch 6,
dadurch gekennzeichnet, daß der Kopf (24a) der Implantatelektrode (24) dem Kopf des Implantates unter Berücksichtigung des Funkenspaltes (32) entspricht.

8. Vorrichtung nach Anspruch 6 oder 7,
dadurch gekennzeichnet, daß die Modellhülse (12) mit einem Schlitz oder Spalt (16) zur Aufnahme von leitfähigem Material (18), wie z.B. Draht, Litze oder Band, für den Anschluß an die Funkenerosionseinrichtung (26, 28) versehen ist.

9. Vorrichtung nach mindestens einem der Ansprüche 6 bis 8,
dadurch gekennzeichnet, daß entsprechend den unterschiedlichen Kopfformen von erhältlichen Implantatfabrikaten verschiedene Implantatelektroden (24) vorgesehen sind, deren Profil (24b) außerhalb des Kopfes (24a) im wesentlichen gleich und auf die Modellhülse (12) abgestimmt ist.

10. Vorrichtung nach mindestens einem der Ansprüche 6 bis 9,
gekennzeichnet durch einen am vom Kiefer des Patienten über das Implantat zu nehmenden Abdruck anzuordnenden Abdruckpfosten, an dem zur Herstellung des Modells (10) die Modellhülse (12) lösbar befestigbar ist.

11. Vorrichtung nach mindestens einem der Ansprüche 6 bis 10,
gekennzeichnet durch
- ein in der Modellhülse (12) lösbar befestigbares Modellimplantat (20), dessen Kopf (20a) dem Kopf des Implantates gleicht, und
- ein zur Modellierung des zahnprothetischen Gerüstes (30) am Modellimplantat (20) lösbar befestigbares Aufbauelement (22).

12. Vorrichtung nach Anspruch 11,
dadurch gekennzeichnet, daß entsprechend den unterschiedlichen Kopfformen von erhältlichen Implantatfabrikaten verschiedene Modellimplantate (20) vorgesehen sind, deren Profil (20b) außerhalb des Kopfes (20a) im wesentlichen gleich und auf die Modellhülse (12) abgestimmt ist.

## Claims

1. A process for constructing dental prosthesis structures (30) to be secured to implants, having the steps of:
- making a model (10), at least of the section of a patient's jaw containing the implant, and arranging therein a model shell (12) of metal at a point corresponding to the position of the implant in the patient's jaw, and
- making a dental prosthesis structure (30) of metal, from the model (10),
characterized by the further steps of:
- detachably securing in the model shell (12) an implant electrode (24) of metal, the head (24a) of which substantially corresponds to the head of the implant,
- connecting to a spark erosion device (26, 28) the model shell (12) and/or the implant electrode (24) on the one hand and the dental prosthesis structure (30) on the other, in a manner such that the model shell (12) and/or the implant electrode (24) forms the one electrode, and the dental prosthesis structure (30) forms the other electrode, and
- moving the model (10) having the implant electrode (24) and the dental prosthesis structure (30) towards one another and thus eroding the dental prosthesis structure (30) such that it is adapted to the head of the implant.

2. A process according to Claim 1,
characterized in that the head (24a) of the implant electrode (24) corresponds to the head of the implant, taking into account the spark gap (32).

3. A process according to Claim 1 or 2,
characterized in that the model shell (12) is provided with a slit or gap (16) for receiving conductive material (18), for example wire, flex or tape, for connection to the spark erosion device (26, 28).

4. A process according to at least one of Claims 1 to 3,
characterized in that, before producing the model (10),
- an impression is taken of the patient's jaw above the implant, using an impression post, and
- the model shell (12) is detachably secured to the impression post.

5. A process according to at least one of Claims 1 to 4,
characterized in that, after producing the model (10) and before producing the dental prosthesis structure (30),
- a model implant (20), the head (24a) of which is similar to the head of the implant, is detachably secured in the model shell (12), and
- an add-on element (22), in particular of synthetic material, is detachably secured to the model implant (20).

6. A device for constructing dental prosthesis structures (30) to be secured to implants, in particular using a process according to at least one of Claims 1 to 5, having,
- at a point corresponding to the position of the implant in a patient's jaw, a model shell (12) of metal, which may be positioned in a model (10) made at least of the section of the jaw containing the implant,
characterized by
- an implant electrode (24) which is manufactured from metal and is securable in the model shell (12), the head (24a) of which implant electrode (24) substantially corresponds to the head of the implant, and
- a spark erosion device (26, 28) which is constructed in a manner such that
- there may be connected thereto the model shell (12) and/or the implant electrode (24) on the one hand and a dental prosthesis structure (30), made beforehand, on the other, in a manner such that the model shell (12) and/or the implant electrode (24) forms the one electrode, and the dental prosthesis structure (30) forms the other electrode, and
- the model (10) having the implant electrode (24) and the dental prosthesis structure (30) may be moved towards one another and thus the dental prosthesis structure (30) may be eroded such that it may be adapted to the head of the implant.

7. A device according to Claim 6,
characterized in that the head (24a) of the implant electrode (24) corresponds to the head of the implant, taking into account the spark gap (32).

8. A device according to Claim 6 or 7,
characterized in that the model shell (12) is provided with a slit or gap (16) for receiving conductive material (18), for example wire, flex or tape, for connection to the spark erosion device (26, 28).

9. A device according to at least one of Claims 6 to 8,
characterized in that there are provided various implant electrodes (24) corresponding to the different head shapes of available makes of implant, the profile (24b) of which implant electrodes (24), apart from the head (24a), is substantially similar and matched to the model shell (12).

10. A device according to at least one of Claims 6 to 9,
characterized by an impression post to be arranged on the impression to be taken of the patient's jaw above the implant, to which impression post there may be detachably secured the model shell (12) for making the model (10).

11. A device according to at least one of Claims 6 to 10,
characterized by
- a model implant (20) which may be detachably secured in the model shell (12), the head (20a) of which model implant (20) is similar to the head of the implant, and
- an add-on element (22) which may be detachably secured to the model implant (20) for making a model of the dental prosthesis structure (30).

12. A device according to Claim 11,
characterized in that there are provided various model implants (20) corresponding to the different head shapes of available makes of implant, the profile (20b) of which model implants (20), apart from the head (20a), is substantially similar and matched to the model shell (12).

## Revendications

1. Procédé de façonnage de prothèses dentaires destinées à être fixées aux implants (30), comprenant les étapes suivantes :
- fabriquer un modèle (10) au moins de la portion d'un maxillaire de patient qui renferme l'implant et y placer une douille modèle (12) en métal en un endroit correspondant à la position de l'implant dans le maxillaire du patient, et
- fabriquer à l'aide du modèle (10) une prothèse dentaire (30) en métal,
caractérisé par les autres étapes ci-après :
- fixer de manière amovible dans la douille modèle (12) une électrode implant (24) en métal dont la tête (24a) correspond pour l'essentiel à la tête de l'implant,
- raccorder à un dispositif d'étincelage (26, 28) d'une part la douille modèle (12) et/ou l'électrode implant (24) et d'autre part la prothèse dentaire (30), de telle sorte que la douille modèle (12) et/ou l'électrode implant (24) constitue(nt) une électrode et la prothèse dentaire (30), l'autre électrode, et
- faire bouger l'un contre l'autre le modèle (10) avec l'électrode implant (24) et la prothèse dentaire (30), érodant ainsi la prothèse dentaire (30) de façon à ce qu'elle s'adapte à la tête de l'implant.

2. Procédé selon la revendication 1, caractérisé en ce que la tête (24a) de l'électrode implant (24) correspond à la tête de l'implant, si l'on tient compte de la fissure d'étincelage (32).

3. Procédé selon la revendication 1 ou 2, caractérisé en ce que la douille modèle (12) est munie d'une fente ou d'une fissure (16) destinée à accueillir un matériau conducteur (18), comme par exemple un fil, un cordon ou un ruban, en vue du raccordement au dispositif d'étincelage (26, 28).

4. Procédé selon au moins une des revendications 1 à 3, caractérisé en ce qu'avant la fabrication du modèle (10),
- une empreinte avec un montant d'empreinte est prise du maxillaire du patient par l'intermédiaire de l'implant.
- la douille modèle (12) est fixée de manière amovible au montant d'empreinte.

5. Procédé selon au moins une des revendications 1 à 4, caractérisé en ce qu'après la fabrication du modèle (10) et avant la fabrication de la prothèse dentaire (30),
- un implant modèle (20) dont la tête (20a) est semblable à la tête de l'implant est fixé de manière amovible dans la douille modèle (12) et
- un élément de montage (22), notamment en plastique, est fixé de manière amovible à l' implant modèle (20).

6. Dispositif servant au façonnage de prothèses dentaires destinées à être fixées aux implants (30), notamment par application d'un procédé selon au moins une des étapes 1 à 5, avec :
- une douille modèle (12) en métal positionnable en un endroit correspondant à la position de l'implant dans le maxillaire du patient dans un modèle (10) fabriqué au moins de la portion de maxillaire qui renferme l'implant, caractérisé par :
- une électrode implant (24) faite de métal et fixable dans la douille modèle (12), dont la tête (24a) correspond pour l'essentiel à la tête de l'implant et
- un dispositif d'étincelage (26, 28) de conception telle :
- que soient raccordables à ce dernier d'une part la douille modèle (12) et/ou l'électrode implant (24) et d'autre part une prothèse dentaire (30) fabriquée auparavant, de telle sorte que la douille modèle (12) et/ou l'électrode implant (24) constitue(nt) une électrode et la prothèse dentaire (30), l'autre électrode, et
- que le modèle (10) avec l'électrode implant (24) et la prothèse dentaire (30) soient bougeables l'un contre l'autre, et la prothèse dentaire (30) ainsi érodable de façon à être adaptable à la tête de l'implant.

7. Dispositif selon la revendication 6, caractérisé en ce que la tête (24a) de l'électrode implant (24) correspond à la tête de l'implant, si l'on tient compte de la fissure d'étincelage (32).

8. Dispositif selon la revendication 6 ou 7, caractérisé en ce que la douille modèle (12) est munie d'une fente ou d'une fissure (16) destinée à accueillir un matériau conducteur (18), comme par exemple un fil, un cordon ou un ruban, en vue du raccordement au dispositif d'étincelage (26, 28).

9. Dispositif selon au moins une des revendications 6 à 8, caractérisé en ce que sont prévues, afin de correspondre aux différentes formes de tête des implants manufacturés qu'il est possible de trouver, diverses électrodes implants (24) dont le profil (24b) est, en dehors de la tête (24a), pour l'essentiel semblable et ajusté à la douille modèle (12).

10. Dispositif selon au moins une des revendications 6 à 9, caractérisé par un montant d'empreinte à disposer sur l'empreinte du maxillaire du patient à prendre par l'intermédiaire de l'implant, auquel la douille modèle (12) est fixable de manière amovible en vue de la fabrication du modèle (10).

11. Dispositif selon au moins une des revendications 6 à 10, caractérisé par :
- un implant modèle (20) fixable de manière amovible dans la douille modèle (12), dont la tête (20a) est semblable à la tête de l'implant et
- un élément de montage (22) fixable de manière amovible à l'implant modèle (20) en vue du modelage de la prothèse dentaire (30).

12. Dispositif selon la revendication 11,caractérisé en ce que sont prévus, afin de correspondre aux différentes formes de tête des implants manufacturés qu'il est possible de trouver, divers implants modèles (20) dont le profil (20b) est, en dehors de la tête (20a), pour l'essentiel semblable et ajusté à la douille modèle (12).
